(19) Europäisches Patentamt
European Patent Office
Office européen des brevets

(11) **EP 2 058 644 A2**

(12) **EUROPÄISCHE PATENTANMELDUNG**

(43) Veröffentlichungstag:
**13.05.2009  Patentblatt 2009/20**

(51) Int Cl.:
***G01N 21/27*** *(2006.01)*

(21) Anmeldenummer: 08167422.8

(22) Anmeldetag: **23.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **06.11.2007  DE 102007052785**

(71) Anmelder: **manroland AG**
**63075 Offenbach/Main (DE)**

(72) Erfinder:
• **Boosmann, Thomas**
**63075 Offenbach (DE)**
• **Lippold, Andreas**
**61273 Wehrheim 3 (DE)**

(54) **Verfahren zum Messen der Farbgebung eines bedruckten Bedruckstoffs innerhalb einer Druckmaschine**

(57)     Die Erfindung betrifft ein Verfahren zum Messen der Farbgebung eines bedruckten Bedruckstoffs innerhalb einer Druckmaschine, wobei der bedruckte Bedruckstoff innerhalb der Druckmaschine mit Hilfe einer mehrere Messpixel aufweisenden Kamera in einem bedruckten Bereich desselben derart vermessen wird, dass mit mehreren Messpixeln der Kamera jeweils ein Farbwert des bedruckten Bereichs des Bedruckstoffs erfasst wird. Erfindungsgemäß wird zusätzlich mit der Kamera der Bedruckstoff in einem unbedruckten Bereich desselben derart vermessen, dass mit den Messpixeln der Kamera jeweils ein Weißwert des unbedruckten Bereichs des Bedruckstoffs erfasst wird, wobei für vorzugsweise jedes Messpixel der messtechnisch erfasste Weißwert des Messpixels mit einem Kalibrierungsweißwert des jeweiligen Messpixels zur Bestimmung eines Korrekturwerts für das jeweilige Messpixel verrechnet wird, und wobei mit Hilfe der Korrekturwerte die Farbwerte der Messpixel korrigiert werden.

EP 2 058 644 A2

## Beschreibung

einer Druckmaschine Die Erfindung betrifft ein Verfahren zum Messen der Farbgebung eines bedruckten Bedruckstoffs innerhalb einer Druckmaschine nach dem Oberbegriff des Anspruchs 1.

Aus der Praxis ist es bereits bekannt, einen bedruckten Bedruckstoff inline zum Bedrucken innerhalb einer Druckmaschine mit Hilfe einer mehrere Messpixel aufweisenden Kamera hinsichtlich seiner Farbgebung derart zu vermessen, dass der bedruckte Bedruckstoff in einem bedruckten Bereich desselben so vermessen wird, dass mit mehreren Messpixeln der Kamera jeweils ein Farbwert des bedruckten Bereichs des Bedruckstoffs erfasst wird. Hierbei wird der Bedruckstoff im zu vermessenden Bereich mit Hilfe einer Beleuchtungsquelle ausgeleuchtet. Die Kamera ist einerseits auf den Typ des verwendeten Bedruckstoffs und andererseits auf die verwendete Beleuchtungsquelle kalibriert.

Im Betrieb kann sich das Beleuchtungsverhalten der Beleuchtungsquelle ebenso wie die Messcharakteristik der verwendeten Kamera verändern. Trotz gleicher Farbgebung des bedruckten Bedruckstoffs führt dies dann zu unterschiedlichen Messwerten für die Messpixel der Kamera, wodurch dann bei aus der Praxis bekannten Verfahren auf eine sich ändernde Farbgebung geschlossen wird, obwohl die Farbgebung als solche eigentlich unverändert bleibt. Werden derartige Messwerte dann zur Farbregelung verwendet, so hat dies negative Auswirkungen auf die Druckqualität. Dies ist von Nachteil.

Hiervon ausgehend liegt der vorliegenden Erfindung das Problem zugrunde, ein neuartiges Verfahren zum Messen der Farbgebung eines bedruckten Bedruckstoffs innerhalb einer Druckmaschine zu schaffen.

Dieses Problem wird durch ein Verfahren gemäß Anspruch 1 gelöst. Erfindungsgemäß wird zusätzlich mit der Kamera der Bedruckstoff in einem unbedruckten Bereich desselben derart vermessen, dass mit den Messpixeln der Kamera jeweils ein Weißwert des unbedruckten Bereichs des Bedruckstoffs erfasst wird, wobei für vorzugsweise jedes Messpixel der messtechnisch erfasste Weißwert mit einem Kalibrierungsweißwert des jeweiligen Messpixels zur Bestimmung eines Korrekturwerts für das jeweilige Messpixel verrechnet wird, und wobei mit Hilfe der Korrekturwerte die Farbwerte der Messpixel korrigiert werden.

Mit der hier vorliegenden Erfindung wird vorgeschlagen, innerhalb der Druckmaschine inline zum Bedrucken des Bedruckstoffs zusätzlich zu einem bedruckten Bereich des bedruckten Bedruckstoffs einen unbedruckten Bereich desselben zu vermessen, sodass mit vorzugsweise jedem Messpixel der Kamera weiterhin ein Weißwert des unbedruckten Bereichs des Bedruckstoffs erfasst wird. Für vorzugsweise jedes Messpixel der Kamera wird der messtechnisch erfasste Weißwert eines jeden Messpixels mit einem Kalibrierungsweißwert des jeweiligen Messpixels zur Bestimmung eines Korrekturwerts für das jeweilige Messpixel verrechnet, wobei mit Hilfe der Korrekturwerte messtechnisch erfasste Farbwerte der Messpixel korrigiert werden.

Hierdurch können Veränderungen der gemessenen Farbwerte, die durch ein sich veränderndes Beleuchtungsverhalten der Beleuchtungsquelle oder durch eine sich verändernde Messcharakteristik der Kamera verursacht werden, kompensiert bzw. korrigiert werden. Helligkeitsschwankungen der Beleuchtungsquelle, ein Drift der gesamten Kamera sowie Drifts einzelner Messpixel können so korrigiert werden, sodass hierdurch die Messung von Farbwerten nicht beeinflusst wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, nachfolgend näher erläutert.

Die hier vorliegende Erfindung betrifft ein Verfahren zum Messen der Farbgebung eines bedruckten Bedruckstoffs innerhalb einer Druckmaschine inline zum Bedrucken des Bedruckstoffs.

Der bedruckte Bedruckstoff wird innerhalb der Druckmaschine mit Hilfe einer mehrere Messpixel aufweisenden Kamera in einem bedruckten Bereich desselben derart vermessen, dass mit mehreren der Messpixel, vorzugsweise jedem Messpixel, der Kamera ein Farbwert des bedruckten Bereichs des Bedruckstoffs erfasst wird.

Im Sinne der hier vorliegenden Erfindung wird zusätzlich mit der Kamera der Bedruckstoff in einem unbedruckten Bereich desselben derart vermessen, dass mit vorzugsweise jedem Messpixel der Kamera weiterhin ein Weißwert des unbedruckten Bereichs des Bedruckstoffs erfasst wird.

Für vorzugsweise jedes Messpixel der Kamera wird der messtechnisch erfasste Weißwert mit einem Kalibrierungsweißwert des jeweiligen Messpixels verrechnet, um so einen Korrekturwert für das jeweilige Messpixel zu bestimmen. Mit Hilfe der Korrekturwerte der Messpixel können dann messtechnisch erfasste Farbwerte der Messpixel korrigiert werden.

Eine Korrektur der Farbwerte der Messpixel auf Basis eines messtechnisch erfassten Weißwerts sowie Kalibrierungsweißwerts der Messpixel erfolgt vorzugsweise unter Verwendung eines Korrekturwerts, der für vorzugsweise jedes Messpixel der Kamera nach folgender Gleichung ermittelt wird:

$$K_i = \frac{X_{i-W} - X_{i-S}}{Y_{i-W} - X_{i-S}}$$

wobei $K_i$ der Korrekturwert des i-ten Pixels, $X_{i-W}$ der Kalibrierungsweißwert des i-ten Pixels, $X_{i-S}$ der Kalibrierungsschwarzwert des i-ten Pixels und $Y_{i-W}$ der messtechnisch erfasste Weißwert des i-ten Pixels ist. $X_{i-S}$ kann auch Null betragen.

Der erfasste Weißwert kann aus mehreren Einzelmessungen desselben Messpixels i auf einem oder mehreren Bedruckstoffen gemittelt werden, wobei dann ein gemittelter Weißwert $Y_{i-W}$ zur Bestimmung des Korrekturwerts $K_i$ für das jeweilige Messpixel verwendet wird.

Mit dem obigen Korrekturwert wird dann der Farbwert eines jeden Pixels nach folgender Formel verrechnet:

$$Z_{i-KORR} = K_i * (Z_{i-MESS} - X_{i-S}) + X_{i-S}$$

oder vereinfacht nach folgender Formel:

$$Z_{i-KORR} = K_i * (Z_{i-MESS} - X_{i-S})$$

wobei $Z_{i-KORR}$ der korrigierte Farbwert des i-ten Pixels und $Z_{i-MESS}$ der gemessene Farbwert des i-ten Pixels ist. Für den Fall, dass $X_{i-S}$ Null beträgt, gilt:

$$Z_{i-KORR} = K_i * Z_{i-MESS}$$

Nach einer vorteilhaften Weiterbildung der hier vorliegenden Erfindung wird inline zum Bedrucken zusätzlich zum Farbwert sowie Weißwert mit der Kamera für vorzugsweise jedes Messpixel der Kamera auch ein Schwarzwert erfasst, wobei für vorzugsweise jedes Messpixel der messtechnisch erfasste Schwarzwert des Messpixels mit einem Kalibrierungsschwarzwert des jeweiligen Messpixels zur Bestimmung des Korrekturwerts für das jeweilige Messpixel nach folgender Gleichung verrechnet wird:

$$K_i = \frac{X_{i-W} - X_{i-S}}{Y_{i-W} - Y_{i-S}}$$

wobei $K_i$ der Korrekturwert des i-ten Pixels, $X_{i-W}$ der Kalibrierungsweißwert des i-ten Pixels, $X_{i-S}$ der Kalibrierungsschwarzwert des i-ten Pixels, $Y_{i-W}$ der messtechnisch erfasste, gegebenenfalls gemittelte Weißwert des i-ten Pixels und $Y_{i-S}$ der messtechnisch erfasste Schwarzwert des i-ten Pixels ist.

Auch in diesem Fall kann der erfasste Schwarzwert aus mehreren Einzelmessungen desselben Messpixels i gemittelt werden, wobei dann ein gemittelter Schwarzwert $Y_{i-S}$ zur Bestimmung des Korrekturwerts $K_i$ für das jeweilige Messpixel verwendet wird.

Auch mit dem obigen Korrekturwert erfolgt eine Korrektur der Farbwerte der jeweiligen Messpixel dadurch, dass die Farbwerte mit dem Korrekturwert des jeweiligen Messpixels verrechnet werden, und zwar nach folgender Formel:

$$Z_{i-KORR} = K_i * (Z_{i-MESS} - Y_{i-S}) + X_{i-S}$$

oder vereinfacht nach folgender Formel:

$$Z_{i-KORR} = K_i * (Z_{i-MESS} - Y_{i-S})$$

wobei $Z_{i-KORR}$ der korrigierte Farbwert des i-ten Pixels und $Z_{i-MESS}$ der gemessene Farbwert des i-ten Pixels ist.

Schwarzwerte werden messtechnisch derart erfasst, dass die Kamera dann Messwerte aufnimmt, wenn sich kein Bedruckstoff im Messfeld der Kamera befindet.

Mit dem erfindungsgemäßen Verfahren kann für vorzugsweise jedes Messpixel einer Kamera ein kontinuierlicher Weißabgleich sowie Schwarzabgleich durchgeführt werden. Veränderungen der Farbwerte, die auf einem sich verändernden Messverhalten der Kamera sowie einem sich verändernden Beleuchtungsverhalten der Beleuchtungsquelle beruhen, können kompensiert werden, sodass demnach die Messung der Farbgebung eines bedruckten Bedruckstoffs durch derartige Effekte nicht beeinträchtigt wird. Hierdurch kann die Qualität in der Messung der Farbgebung eines bedruckten Bedruckstoffs gesteigert werden.

Die Positionierung der unbedruckten Bereiche des bedruckten Bedruckstoffs, in welchen die Weißwerte messtechnisch erfasst werden, werden entweder auf elektronischem Wege aus der Vorstufe bereitgestellt, alternativ werden dieselben durch manuelle Eingaben am Mess- oder Inspektionssystem bestimmt. Die Positionierung der bedruckten Bereiche des bedruckten Bedruckstoffs, in welchen die Farbwerte messtechnisch erfasst werden, werden vorzugsweise auf elektronischem Wege aus der Vorstufe bereitgestellt. Auch diese Bereiche können jedoch durch manuelle Eingaben am Mess- oder Inspektionssystem bestimmt werden.

**Patentansprüche**

1. Verfahren zum Messen der Farbgebung eines bedruckten Bedruckstoffs innerhalb einer Druckmaschine, wobei der bedruckte Bedruckstoff innerhalb der Druckmaschine mit Hilfe einer mehrere Messpixel aufweisenden Kamera in einem bedruckten Bereich desselben derart vermessen wird, dass mit mehreren Messpixeln der Kamera jeweils ein Farbwert des bedruckten Bereichs des Bedruckstoffs erfasst wird,
**dadurch gekennzeichnet,**
**dass** zusätzlich mit der Kamera der Bedruckstoff in einem unbedruckten Bereich desselben derart vermessen wird, dass mit den Messpixeln der Kamera jeweils ein Weißwert des unbedruckten Bereichs des Bedruckstoffs erfasst wird, wobei für vorzugsweise jedes Messpixel der messtechnisch erfasste Weißwert des Messpixels mit einem Kalibrierungsweißwert des jeweiligen Messpixels zur Bestimmung eines Korrekturwerts für das jeweilige Messpixel verrechnet wird, und wobei mit Hilfe der Korrekturwerte die Farbwerte der Messpixel korrigiert werden.

2. Verfahren nach Anspruch 1,
**dadurch gekennzeichnet,**
**dass** der erfasste Weißwert aus mehreren Einzelmessungen desselben Messpixels auf einem oder mehreren Bedruckstoffen gemittelt und der gemittelte Weißwert zur Bestimmung des Korrekturwerts für das jeweilige Messpixel verwendet wird.

3. Verfahren nach Anspruch 1 oder 2,
**dadurch gekennzeichnet,**
**dass** der Korrekturwert für die Messpixel nach folgender Gleichung ermittelt wird:

$$K_i = \frac{X_{i-W} - X_{i-S}}{Y_{i-W} - X_{i-S}}$$

wobei $K_i$ der Korrekturwert des i-ten Pixels, $X_{i-W}$ der Kalibrierungsweißwert des i-ten Pixels, $X_{i-S}$ der Kalibrierungsschwarzwert des i-ten Pixels und $Y_{i-W}$ der messtechnisch erfasste, gegebenenfalls gemittelte Weißwert des i-ten Pixels ist.

4. Verfahren nach Anspruch 1,
**dadurch gekennzeichnet,**
**dass** zusätzlich mit der Kamera für jedes Messpixel der Kamera ein Schwarzwert erfasst wird, wobei für jedes Messpixel der messtechnisch erfasste Schwarzwert des Messpixels mit einem Kalibrierungsschwarzwert des jeweiligen Messpixels zur Bestimmung des Korrekturwerts für das jeweilige Messpixel verrechnet wird.

5. Verfahren nach Anspruch 4,
**dadurch gekennzeichnet,**
**dass** der erfasste Schwarzwert aus mehreren Einzelmessungen desselben Messpixels gemittelt und der gemittelte Schwarzwert zur Bestimmung des Korrekturwerts für das jeweilige Messpixel verwendet wird.

6. Verfahren nach Anspruch 4 oder 5,
**dadurch gekennzeichnet,**
**dass** der Korrekturwert für die Messpixel nach folgender Gleichung ermittelt wird:

$$K_i = \frac{X_{i-W} - X_{i-S}}{Y_{i-W} - Y_{i-S}}$$

wobei $K_i$ der Korrekturwert des i-ten Pixels, $X_{i-W}$ der Kalibrierungsweißwert und $X_{i-S}$ der Kalibrierungsschwarzwert des i-ten Pixels, $Y_{i-W}$ der messtechnisch erfasste, gegebenenfalls gemittelte Weißwert und $Y_{i-S}$ der messtechnisch erfasste, gegebenenfalls gemittelte Schwarzwert des i-ten Pixels ist.

7. Verfahren nach einem der Ansprüche 1 bis 6,
**dadurch gekennzeichnet,**
**dass** die Positionierung der unbedruckten Bereiche des bedruckten Bedruckstoffs, in welchen die Weißwerte messtechnisch erfasst werden, auf elektronischem Wege aus der Vorstufe bereitgestellt werden.

8. Verfahren nach einem der Ansprüche 1 bis 6,
**dadurch gekennzeichnet,**
**dass** die Positionierung der unbedruckten Bereiche des bedruckten Bedruckstoffs, in welchen die Weißwerte messtechnisch erfasst werden, durch manuelle Eingaben am Mess- oder Inspektionssystem bestimmt werden.

9. Verfahren nach einem der Ansprüche 1 bis 8,
**dadurch gekennzeichnet,**
**dass** dasselbe inline zum Drucken innerhalb der Druckmaschine durchgeführt wird.